# EUROPÄISCHE PATENTSCHRIFT

(11) **EP 1 153 149 B1**
(45) Veröffentlichungstag und Bekanntmachung des Hinweises auf die Patenterteilung: **02.07.2003**
(21) Anmeldenummer: 00904918.0
(22) Anmeldetag: 15.01.2000
(51) Int. Cl.: C22B 7/04, C22B 7/00, B02C 19/18, B09B 3/00

(54) **VERFAHREN ZUR AUFBEREITUNG VON ASCHE AUS MUELLVERBRENNUNGSANLAGEN DURCH ENTSALZUNG UND KÜNSTLICHEN ALTERUNG MITTELS UNTER-WASSER HOCHSPANNUNGS-FUNKENENTLADUNGEN**
METHOD FOR PROCESSING ASHES OF INCINERATION PLANTS BY DESALINATION AND ARTIFICIAL AGEING BY MEANS OF UNDERWATER HIGH-VOLTAGE DISCHARGE
PROCEDE DE TRAITEMENT DE CENDRES PROVENANT D'INSTALLATIONS D'INCINERATION D'ORDURES PAR ELIMINATION DES SELS ET VIEILLISSEMENT ARTIFICIEL PAR DECHARGES A ETINCELLES HAUTE TENSION SOUS L'EAU

(30) Priorität: 21.01.1999 DE 19902010
(43) Veröffentlichungstag der Anmeldung: 14.11.2001
(73) Patentinhaber: Forschungszentrum Karlsruhe GmbH, 76133 Karlsruhe (DE)
(72) Erfinder: SCHULTHEISS, Christoph, D-76327 Berghausen (DE); ADELHELM, Christel, D-76707 Hambrücken (DE); BERGFELDT, Britta, D-76344 Eggenstein-Leopoldshafen (DE); STRAESSNER, Ralf, D-76835 Gleisweiler (DE); NEUBERT, Volker, D-76889 Kapsweyer (DE); DENNIG, Helmut, D-32429 Minden (DE); KOTTE, Bernard, D-32457 Porta Westfalia (DE)
(86) Internationale Anmeldenummer: EP0000279
(87) Internationale Veröffentlichungsnummer: WO00043557

(56) Entgegenhaltungen:
- WO-A-97/44500
- DE-A- 19 534 232
- DATABASE WPI Section Ch, Week 199544 Derwent Publications Ltd., London, GB; Class E37, AN 1995-340068 XP002137896 & JP 07 232913 A (KOBE STEEL LTD), 5. September 1995 (1995-09-05)
- DATABASE WPI Section Ch, Week 199615 Derwent Publications Ltd., London, GB; Class J09, AN 1996-141905 XP002137897 & JP 08 003655 A (MITSUBISHI MATERIALS CORP), 9. Januar 1996 (1996-01-09)
- DATABASE WPI Section Ch, Week 199808 Derwent Publications Ltd., London, GB; Class D15, AN 1998-080891 XP002137898 & JP 09 314088 A (MITSUBISHI JUKOGYO KK), 9. Dezember 1997 (1997-12-09)

## Beschreibung

Die Erfindung betrifft ein Verfahren zur Aufbereitung von Asche aus Müllverbrennungsanlagen und von mineralischen Rückständen durch Entsalzung und künstlichen Alterung durch elektrodynamische Unter-Wasser-Prozesse und Anlage zur Durchführung des Verfahrens.

*In der DE-195 34 232 ist ein Verfahren und eine Anlage zur Zerkleinerung und Zertrümmerung von Festkörpern durch schnelle Entladung eines elektrischen Energiespeichers in einer Prozessflüssigkeit, in der die Festkörper eingetaucht sind. Die Festkörper sind teilweise metallisch wie z.B. Stahlbetonbrocken. Im Gegensatz zu elektrohydraulischen Verfahren, bei denen die Zerkleinerung durch Schockwelleneinwirkung von außen auf den Festkörper erfolgt, wird durch dieses Verfahren der Festkörper durch Schockwellenerzeugung in ihm explodiert. Dies ist erst unter Einhaltung verschiedener Parametersätze hinsichtlich Durchbruchspannungsamplitude, einer Mindestzeit für das Erreichen dieser Amplitude und den höchstmöglichen Energieeintrag in den Festkörper gegeben.*

Bisher mußte die Asche zur Reduktion des wässerigen Schwermetallauszugs drei Monate zwischengelagert werden und danach nur zur Verfüllung lt. Deponieklasse 1 ohne Grundwasserkontakt eingesetzt werden.

Rostaschen aus Müllverbrennungsanlagen stellen zunächst einen Schadstoff dar. Zur Beherrschung der Kosten wird versucht, die aus Müllverbrennungsanlagen anfallenden Aschen in irgend einer Weise wirtschaftlich zu nutzen und nicht nur kostenträchtig zu deponieren. Dazu hat der Gesetzgeber das Regulierungswerk TA Siedlungsabfall (TASi) herausgegeben. Demnach muß die Asche nach ihrer Entstehung zur Qualitätsverbesserung zunächst einige Zeit (3 Monate) auf eigens dafür eingerichteten, vom Grundwasser isolierten Lagerplätzen ruhen. Die Kosten für die Behandlung belaufen sich z. Z. für den Erzeuger auf etwa DM 40,-- pro Tonne Rostasche.

Die Einklassifizierung der Asche als Schadstoff rührt von drei Faktoren her:
1. dem erhöhten Salzgehalt,
2. der Eluierbarkeit von Schwermetallen und Anionen,
3. des nicht vollständigen Ausbrandes, also dem Gehalt an Kohlenstoff (TOC, Total Organic Carbon).

Die folgende Tabelle gibt einen Überblick über die zugelassenen Werte, unterschieden nach Klassen im Vergleich mit den Werten frischer Asche aus Müllverbrennung:

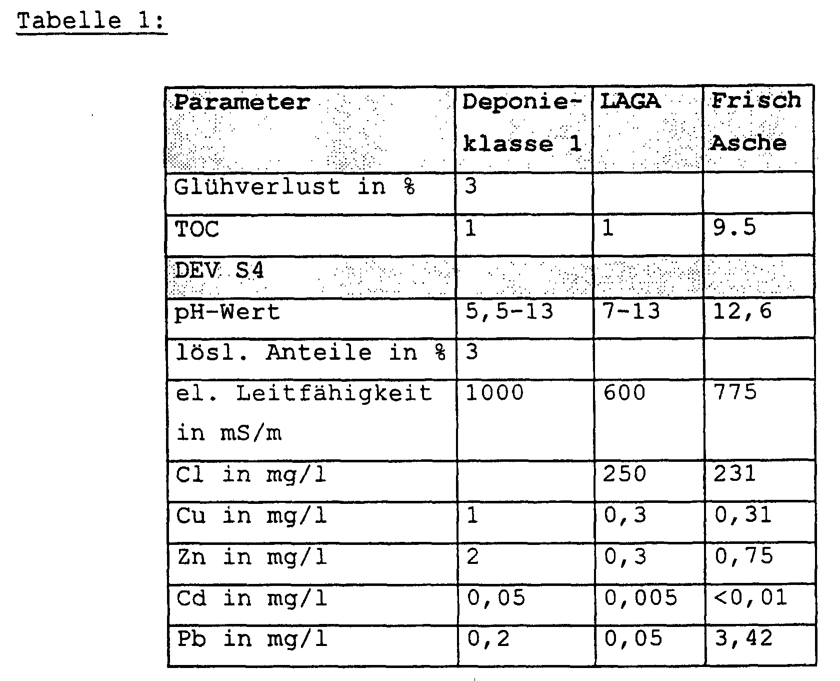

Auffällig ist der hohe Gehalt an löslichem Blei in der frischen Asche. Das liegt daran, daß Bleisalze, wie auch andere Schwermetallsalze, im basischen, also bei hohem pH-Wert, leicht löslich sind. Der hohe Bleigehalt ist maßgeblich für die erforderliche Zwischenlagerung. Die Asche wird in der Zeit der Lagerung durch Aufnahme von Sauerstoff und Kohlendioxid chemisch stabiler. Hier ist insbesondere die Bindung basischen Calciumhydroxids und die Umwandlung in Carbonat mittels der Aufnahme von Kohlendioxid zu nennen, die den pH-Wert senkt. Zusätzlich wird Blei während der Zwischenlagerung durch Bildung von wasserunlöslichem Bleikarbonat stabilisiert.

Zur Zeit produzieren die Müllverbrennungsanlagen in der Bundesrepublik Deutschland 3x10⁶ kg Rostaschen pro Tag. Im Vergleich mit anderen Ländern ist zukünftig noch mit einer deutlichen Zunahme der Mengen zu rechnen.

Nach Ende der Lagerung wird die Asche hauptsächlich als Unterfüllmaterial im Straßenbau weiter verwendet, dort hat sie keinen Kontakt mit dem Grundwasser, bzw. kommt sie nicht in Kontakt mit ihm.

Die Forderung ist also - und daraus ergibt sich die Aufgabe, die der Erfindung zugrunde liegt - nach einem Verfahren zu suchen, das die Asche in möglichst kurzer Zeit so verändert, daß eine Zwischenlagerung nicht nötig ist und daß sie zumindest in Deponieklasse 1 weiter verwendet werden kann.

Die Aufgabe wird durch ein Verfahren zur Aufbereitung und künstlichen Alterung von Rostasche aus Müllverbrennungsanlagen und von mineralischen Rückständen gemäß den Schritten des Anspruchs 1 gelöst. Hierzu wird das Gut über eine Transportvorrichtung zu einem mit Prozeßflüssigkeit gefüllten Reaktionsgefäß gefördert und dort hinein geschüttet. Die Prozeßflüssigkeit ist im allgemeinen Wasser, kann aber auch eine andersartige, eine für den Prozeß geeignete Flüssigkeit sein.

Bei der Förderung nach oben zum Reaktionsgefäß wird das Gut im Gegenstrom Prozeßflüssigkeit daraus zugeführt. Dadurch werden die Salze auf den Körnern abgespült, gelöst, in ein Vorratsbecken geschwemmt, und von dort der Entsorgung zugeführt, bei der die gesättigte Salzlösung zum Ausfällen der Salze einem Verdampfer zugeführt wird.

In die Prozeßflüssigkeit ragen zwei isolierte Elektroden oder eine isolierte Elektrode steht einer im Prozeßgefäß verankerten, geerdeten flächigen Gegenelektrode gegenüber. Die hochspannungsführende Elektrode ist in ihrem distalen Bereich auf eine für den Prozeß geeignete Länge abisoliert (etwa 3 cm). Die blanken metallischen Enden oder Spitzen der beiden Elektroden bzw. einer Spitze zur flächigen Gegenelektrode haben eine für den Prozeß geeignete Separation zueinander, die, am Prozeßmaterial orientiert, 2 bis 7 cm betragen kann. Erfahrungsgemäß erzielt man gute Ergebnisse, wenn die geerdete Elektrode als Sieb unterhalb der hochspannungsführenden Elektrode ausgebildet ist. Auch andere Elektrodenanordnungen sind möglich. Prozeßbedingt stehen die eingetauchten Elektroden parallel zueinander oder sie bilden einen kleinen spitzen Winkel miteinander. Das aber wird von Prozeß zu Prozeß zuvor durch vorausgehende Versuchsentladungen in bekannter Weise optimiert.

Um die Asche möglichst wenig zu zerkleinern bewährt sich eine Siebanordnung mit großer Maschenweite von ∼ 40 mm und einer Blende mit etwa 100 mm Durchmesser. Durch die Einstellbarkeit der Repetitionsrate der Hochspannungsfunkenentladung, wird erreicht, daß jedes Korn während des Falls durch den Sieb und die Blende mit einer Anzahl Schocks beaufschlagt wird. Die Größe der Aschekörner soll im allgemeinen nicht verkleinert werden, deshalb werden die Elektroden, zumindest deren Endbereiche von die Körner zurückhaltenden, dielektrischen Netzen umgeben (Anspruch 2).

Für den optimalen Prozeßablauf wird vor der regulären Prozessierung ein Betriebsparametersatz ermittelt; das betrifft die Entladespannung, die Impulsdauer, die Energie der Einzelentladung und die Repetierrate mit dieselben aufeinander folgen (Anspruch 3). Folgende Parameterbereiche bewähren sich:
- elektrische Feldstärke in den Grenzen zwischen 100 und 300 kV/cm,
- Pulsanstiegszeit überschreitet 500 ns nicht und
- der Funke erzeugt eine Schockwelle mittels Deposition von 120 bis 400 J pro Zentimeter Entladeweg (siehe auch DE 195 43 232).

Mit diesem Parametersatz wird sichergestellt, daß ein wirtschaftlicher Einsatz bei minimalem spezifischen Energieverbrauch und bei gleichzeitig geringster Abnützung von Schaltern im Hochspannungspulsgenerator und dem Elektrodensystem erreicht wird.

Durch die bei der elektrischen Entladung zwischen den beiden freien Elektrodenspitzen ausgelöste Schockwelle werden die flüssigkeitslöslichen Bestandteile des Prozeßguts nahezu vollständig in die Prozeßflüssigkeit überführt und darin gelöst. Diese Lösung wird dann schließlich zur Weiterbehandlung abgeführt (Anspruch 4).

Die Flüssigkeitsbehandlung geschieht im Gegenstrom zur kontinuierlichen Bewegung des Gutes durch die Analge. Das schockbehandelte Gut wird während der Förderung von dem Reaktionsgefäß auf eine Halte oder in eine Mulde mit frischer Prozeßflüssigkeit im Gegenstrom nachgewaschen, um die verbliebenen Schadstoffe vollends auszuschwemmen. Diese restangereicherte Prozeßflüssigkeit wird in das Reaktionsgefäß eingeleitet und nimmt bei der dortigen Prozessierung weitere flüssigkeitslösliche Substanzen auf. Von einem Überlauf an dem Reaktionsgefäß wird dann die Prozeßflüssigkeit ab- und in das Ende einer weiteren Transporteinrichtung eingeleitet, mit der das zu prozessierende Gut in das Reaktionsgefäß geführt wird. Vom Ende dieser Transporteinrichtung bis zu ihrem Anfang spült die Prozeßflüssigkeit die Oberfläche der Körner von ersten Substanzen frei und fließt schließlich am Anfang der Transporteinrichtung gesättigt in ein Auffangbecken ab, von wo sie zur Ausfällung der gelösten Substanzen weitergeleitet wird.

Durch eine jeweilige Entladung und die davon ausgelöste Schockwelle entstehen in der Prozeßflüssigkeit Hydroxylradikale, die zur unmittelbaren Oxidation und Passivierung der eingetauchten Aschepartikel dienen.

In die Prozeßflüssigkeit wird zudem Kohlendioxid eingeleitet. Dadurch wird Kaziumhydroxid gefällt, der pH-Wert der Prozeßflüssigkeit gesenkt und in Folge davon eine Verringerung der Löslichkeit der Schwermetalle erreicht (Anspruch 4 und 5). Schließlich verringert sich dadurch auch die Prozessierungsdauer des Gutes überhaupt.

Aus dem Eluat (DEV S4) stichprobenartig entnommener, fertigen Prozeßguts wird die restliche Schwermetall- und Schadstoffkonzentration ermittelt. Hier zeigt sich die Leistungsfähigkeit des Verfahrens und der dazu verwendeten Anlage: Der Abbau ist nämlich derart, daß die Asche unmittelbar nach dieser Prozessierung mindestens einer Verwendung im Deponieklasse-1-Bereich zugeführt werden kann.

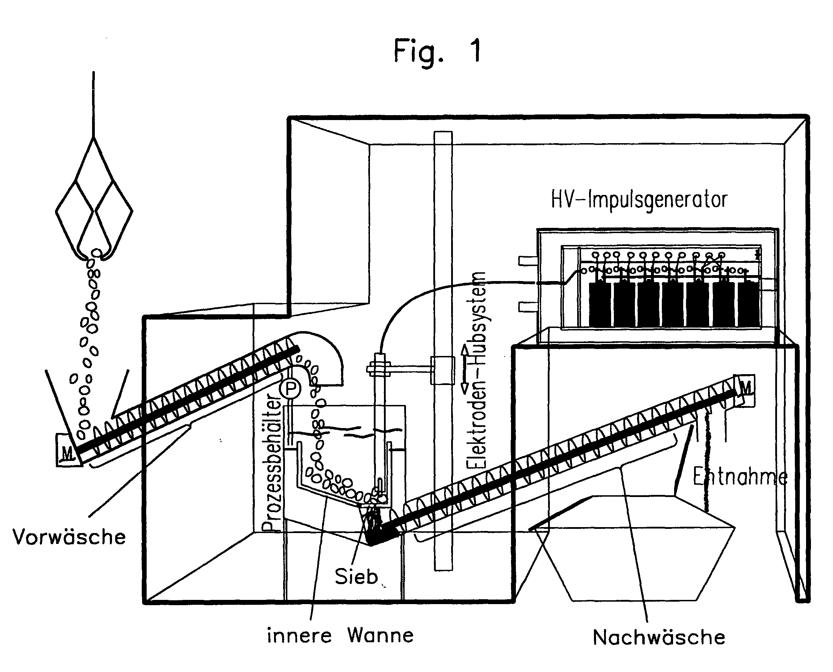

In Anspruch 6 ist die Anlage gekennzeichnet und in Figur 1 der Zeichnung prinzipiell dargestellt, mit der das Verfahren gemäß den Ansprüchen 1 bis 5 mit hoher Wirksamkeit und wirtschaftlich durchzuführen ist.

Sie besteht aus den beiden Transporteinrichtungen, zum einen für die Prozeßgutzufuhr, zum andern für den Abtransport des schockwellenprozessierten Guts. Am Anfang der Transporteinrichtung ist eine Auffangvorrichtung, in die das zu prozessierende Material beispielsweise mit einer Kranschaufel eingeschüttet und von dort mit der Transporteinrichtung in das Reaktionsgefäß gefördert wird. Über die zweite Transporteinrichtung wird das prozessierte Gut von der tiefsten Stelle des Reaktionsgefäßes entnommen und zu einer Halte oder Mulde gefördert. Die beiden Wannen haben bei Aufstellung einen schräg liegenden Bodenbereich. Am tiefsten liegenden Bereich der inneren Wanne ist ein Gitter oder ein Netz durch das das prozessierte Gut nach und nach rieselt und auf den Boden der äußeren Wanne absinkt (Anspruch 8).

Zwischen den beiden Transporteinrichtungen steht das Reaktionsgefäß aus zwei Wannen. Die innere Wanne ist in die Prozeßflüssigkeit untergetaucht. In sie ragen die beiden positionierbaren Elektroden, bzw. ragt die positionierbare Elektrode, falls die Gegenelektrode flächig ist und in der inneren Wanne verankert ist. Die Elektroden sind an einem Hubsystem verankert und mit dem Ausgang des Hochspannungs-Impulsgenerators verbunden.

Frische Prozeßflüssigkeit wird über eine Zufuhr am Ausgang der Transporteinrichtung für die Entnahme des prozessierten Materials in die Anlage kontinuierlich eingeleitet, von wo sie im Gegenstrom unter Nachwaschen des Gutes zum Reaktionsgefäß fließt. Dort wird sie mit einer Pumpe entnommen und in die zuführende Transporteinrichtung eingeleitet, in der sie unter Vorwaschen des zugeführten Gutes als mit Salzen gesättigte Lösung an der Auffangvorrichtung ausgeleitet wird. Für die Ascheprozessierung ist die Prozeßflüssigkeit Wasser. Für andere Materialien sind unter Umständen andere Flüssigkeiten geeigneter, das wird von Fall zu Fall entschieden (Anspruch 7).

Für die Schockwellenprozessierung wird die Anlage elektrisch stromarm betrieben, so daß trotz hohen Durchsatzes die Anlagenteile (Schalter des HV-Impulsgenerators und Elektroden) eine lange Lebensdauer haben bei sehr wirtschaftlich erzeugter, ausgezeichnet umweltverträglicher Qualität des endprozessierten Gutes.

Zum tieferen Verständnis für das Verfahren wird zunächst auf die Wirkung von Schockwellen eingegangen:
Schockwellen, die sich in einer Flüssigkeit ausbreiten, produzieren in ihrer Verdünnungszone Kavitationsbläschen. Diese erzeugen beim Kollabieren infolge thermischer Prozesse bei der adiabatischen Kompression freie Radikale. Die freien Radikale gehören bekanntermaßen zu den stärksten chemischen Reaktionsmitteln. Zum Beispiel erzeugen kollabierende Kavitationsbläschen im Wasser (H₂O) Wasserstoffatome (H) und Hydroxylradikale (OH) im status nascendi. Während der schnellen Abkühlphase der Bläschen verbinden sich die Wasserstoffatome mit anderen Wasserstoffatomen wieder zu Wasserstoffmolekülen (H₂) und die Hydroxylradikale verbinden sich zu Wasserstoffperoxid (H₂O₂). Dieser Vorgang dauert je Entladung nur Mikrosekunden. Bei Beaufschlagung von chemisch reinem Wasser mit Schockwellen konzentriert sich Wasserstoffperoxid auf und es entweicht Wasserstoffgas. In chemisch verunreinigtem Wasser kommt es mit Auftreten der Hydroxylradikale zu spontanen Oxidationsprozessen, die durch langsamer ablaufende, von Wasserstoffperoxid getragenen Prozesse verstärkt werden.
Schockwellen unter Wasser können von Ultraschallgebern, Sprengstoff und elektrodynamischen Entladungen erzeugt werden. Besonders intensiv ist die Kavitationsbläschenerzeugung bei Sprengstoffexplosionen und elektrischen Hochleistungs-Entladungen, jeweils unter Wasser. Wegen der Beherrschbarkeit und des geringen Gefahrenpotentials ist letztere für den Einsatz in einem kontinuierlichen industriellen Verfahren vorteilhaft geeignet. Die zusätzliche Produktion von freien Radikalen aus funkeninduzierten Plasmaprozessen bei Unter-Wasser-Hochleistungs-Entladungen zwischen zwei Elektroden unterstützen das Verfahren zusätzlich, so daß schließlich die Asche nicht mehr auf einer Halte über Wochen hinweg altern muß.

Die Behandlung der Rostasche mit Schockwellen führt zu folgenden Effekten:
1. Die Rostasche ist infolge der geringen Verbrennungstemperatur von sandiger Struktur mit lockeren Verbackungen. Ein geringerer Anteil der Asche besteht aus Schlacke. Damit hat die Asche eine relativ große Oberfläche, an der lösliche Bestandteile anhaften und aus der sich lösliche Bestandteile mit der Zeit eluieren. Unter der Wirkung der Schockwelle zerfallen die nicht stabilen Konglomerate und anhaftende lösliche Bestandteile werden, vergleichbar mit einer Ultraschallreinigung, intensiv abgewaschen.
2.Wegen der sauerstoffarmen Verbrennung sind viele Oxide nicht stabil. Das liegt am geringen Oxidationsgrad (Mangeloxid). Damit ergibt sich eine erhöhte Löslichkeit von Schwermetallen in Wasser, wenn der pH-Wert nicht neutral ist. Bei frischer Asche ist es der hohe Gehalt an Calziumhydroxid, der den pH-Wert basisch stellt. Später können es im Regenwasser gelöste Säuren, aber auch organische Säuren die die Mangeloxide auflösen können und in das Grundwasser eintragen. Das wird verfahrensgemäß dadurch verhindert, daß sich in der stark oxidierenden Umgebung der Schockwelle an der Oberfläche des Korns stabile Oxide bilden, welche die Oberfläche passivieren und die eine Barriere gegen das weitere Eluieren bilden.
3.Die Asche ist nicht vollständig verbrannt. Es befinden sich noch organische Bestandteile in der Asche. Dieser Anteil wird mit TOC (*total organic carbon*) bezeichnet. Die freien Hydroxylradikale und Wasserstoffperoxid oxidieren organische Bestandteile intensiv und können für eine weitgehende Geruchsneutralität nach der Behandlung sorgen.

Tabelle 2 ist die um "Asche gewaschen" und "Asche gewaschen und mit Unter-Wasser-Schockwellen behandelt" erweiterte Tabelle 1.

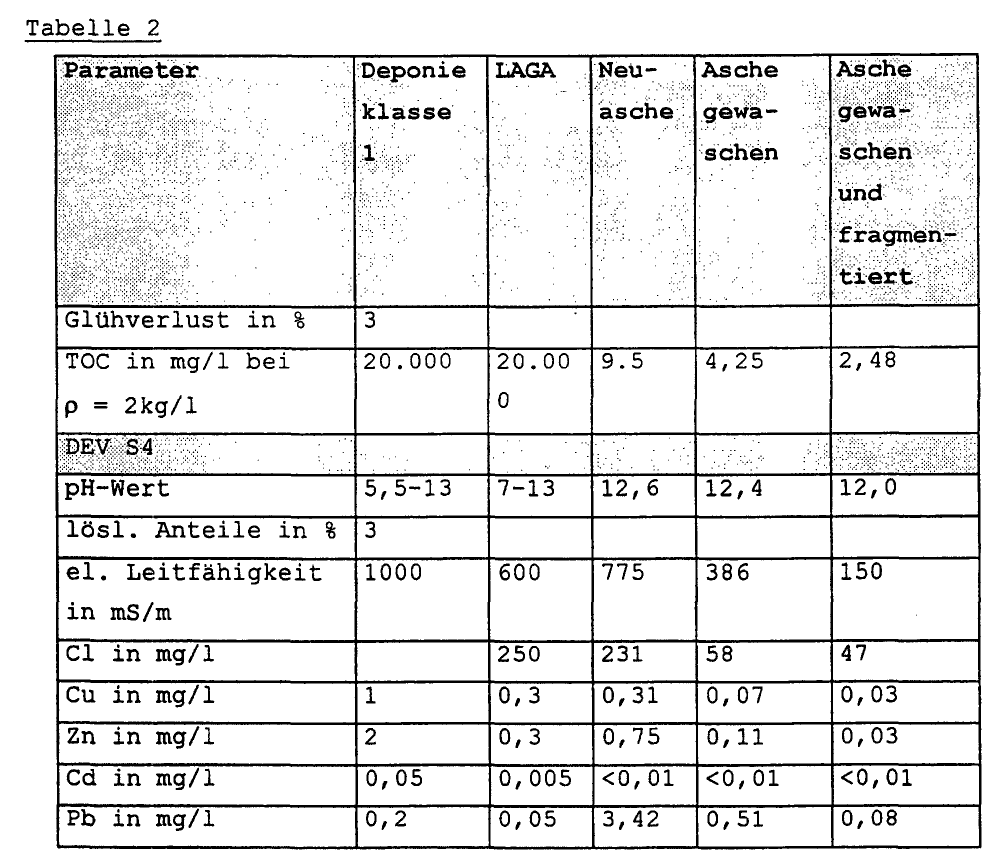

Aus der Tabelle 2 ist die oberflächliche Kontaminierung der Asche mit wasserlöslichen Erdalkali- und Schwermetallsalzen sowie Anionen zu entnehmen. Blei nimmt eine Sonderrolle ein, weil die überwiegende Menge des Bleis in löslicher Form der Asche anhaftet und abgewaschen werden kann. Dennoch gibt die Asche auch nach gründlicher Waschung weiterhin Blei in überhöhter Menge aus dem Inneren des Korns an das umgebende Wasser ab, so daß die eingangs erwähnte Lagerung von drei Monaten für eine Karbonatbildung und zur Absenkung des pH-Wertes und der damit verbundenen Löslichkeit der Bleisalze unumgänglich ist.

Kernpunkt der Erfindung ist die Feststellung, daß eine Lagerung der Rostasche nicht nötig ist, wenn sie unmittelbar nach ihrer Entstehung unter der Prozeßflüssigkeit, hier Wasser, den Schockwellen gepulster elektrodynamischer Hochspannungs-Funkenentladungen für etwa 20 Sekunden bei 4 Hz Wiederholfrequenz ausgesetzt wird, wobei einerseits wasserlösliche Bestandteile der Asche effektiv in das Prozeßwasser ausgewaschen und mit diesem abgeführt werden, und andererseits freie Hydroxylradikale aus Schockwelle und aus funkeninduzierten Plasmaprozessen eine Oxidation und Passivierung der Aschekörner verursachen, so daß nachher im Eluat der behandelten Asche nach DEV S4 gemäß TA Siedlungsabfälle die meßbaren Schwermetallkonzentrationen insgesamt um Größenordnungen reduziert sind und je nach Behandlungsdauer und Prozeßbedingungen (s. u.) eine sofortige Verwendung mindestens im Deponieklasse-1-Bereich damit möglich ist.

In Figur 1 ist am Beispiel der Eluate von Blei der Einfluß von Waschung und Behandlung mit Schockwellen als Funktion der Zeit angegeben. In diesem experimentellen Durchführungsbeispiel verfehlt die Bleikonzentration die von LAGA Z2 geforderte nur knapp.

Die Asche soll als Baustoff eingesetzt werden. Die Bedingung ist aber, daß eine Korngröße von 1 mm nicht unterschritten wird. Daher ist es zweckmäßig den Prozeß so zu gestalten, daß der Asche zur Erzielung der geforderten Alterung nur soviel wie unbedingt nötig zerkleinert wird. Daher ist das Elektrodensystem und die Leistung der davon ausgehenden Schockwellen so zu gestalten, daß die Asche nicht direkt der Funkenentladung ausgesetzt wird, wodurch sie zerkleinert und im Wert als Baustoff verliert, sondern im Abstand am Elektrodensystem vorbeigeführt und durch die von Schockwelle lokal erzeugten Radikale chemisch gealtert wird.

Eine Leistungsbegrenzung der Funkenentladung wird auch aus einem anderen Grund angestrebt. Obwohl die Produktion von Kavitationsbläschen überproportional mit der Entladeleistung steigt ist es zweckmäßig Energietönung der Funkenentladungen zu beschränken, um ein übermäßiges Abnützen von auf Gasfunkenstrecken beruhenden Schaltern im Hochspannungspulsgenerator im Elektrodensystem zu vermeiden. Das erreicht man, indem man den Strom (I), der durch die Schalter und durch die Elektroden bzw. durch den Funken geht, in den Kiloamperebereich begrenzt. Die einzustellende Leistung (N = UI ) im Funken zur Erzeugung intensiver Schockwellen wird über die Spannung (U) eingestellt.

Ein geeigneter Typ Hochspannungspulsgenerator, der mit Spannungen bis 400 kV operieren kann, wird in der DP 195 43 232 beschrieben. Er wird vorzugsweise für diesen Prozeß verwendet.

In der Anmeldung DP 195 43 232 wird zwar geltend gemacht, daß für Pulsdauern unter 500 ns Wasser bessere Isolationseigenschaften zeigt als die meisten dielektrischen Festkörper und daher die Entladung durch den Festkörper geht. In der vorliegenden Anmeldung soll aber eine starke Fragmentierung vermieden werden, weil die Asche als Baustoff dadurch minderwertig wird. Zur Umgehung dieses Hindernisses wird deshalb die Asche im Abstand am Elektrodensystem vorbeigeführt. Dieser Abstand wird experimentell durch prozeßmaterialabhängige Versuchsentladungen ermittelt. Zur Überwindung der Hochspannungsfestigkeit von Wasser wird der gegenseitige Elektrodenabstand soweit verringert, daß ein Durchbruch in einen Funken stattfindet.

Im Verfahren fällt versalztes Prozeßwasser an. Das wirkt sich nachteilig auf die Hochspannungsentladungen aus, da ein immer größerer Anteil der Energie über den elektrolytischen Widerstand abfließt. Daher ist die kontinuierliche Zugabe von Frischwasser und die Abfuhr von versalzenem Wasser zwingend. Der Nachschub von Frischwasser und die Entsorgung von versalztem Wasser stellt aus synergetischen Gründen bei Müllverbrennungsanlagen kein kritisches Problem dar. Die Gesamtanlage verfügt im allgemeinen über große Regenwasservorräte, da aufgrund von Auflagen das Regenwasser im Bereich des Kraftwerks aufgefangen wird.

Müllkraftwerke haben eine aufwendige Abgasreinigung, wobei alle ausgefilterten und naßchemisch gebundenen Schadstoffe (Gips) in einem Wäscher getrocknet werden. Somit kann das alkali-, erdalkali- und schwermetallhaltige Prozeßwasser im karfwerkseigenen Wäscher ebenfalls verdampft und als Feststoff, zusammen mit anderen aus der Rauchgasreinigung stammenden Feststoffen untertage verbracht und deponiert werden.

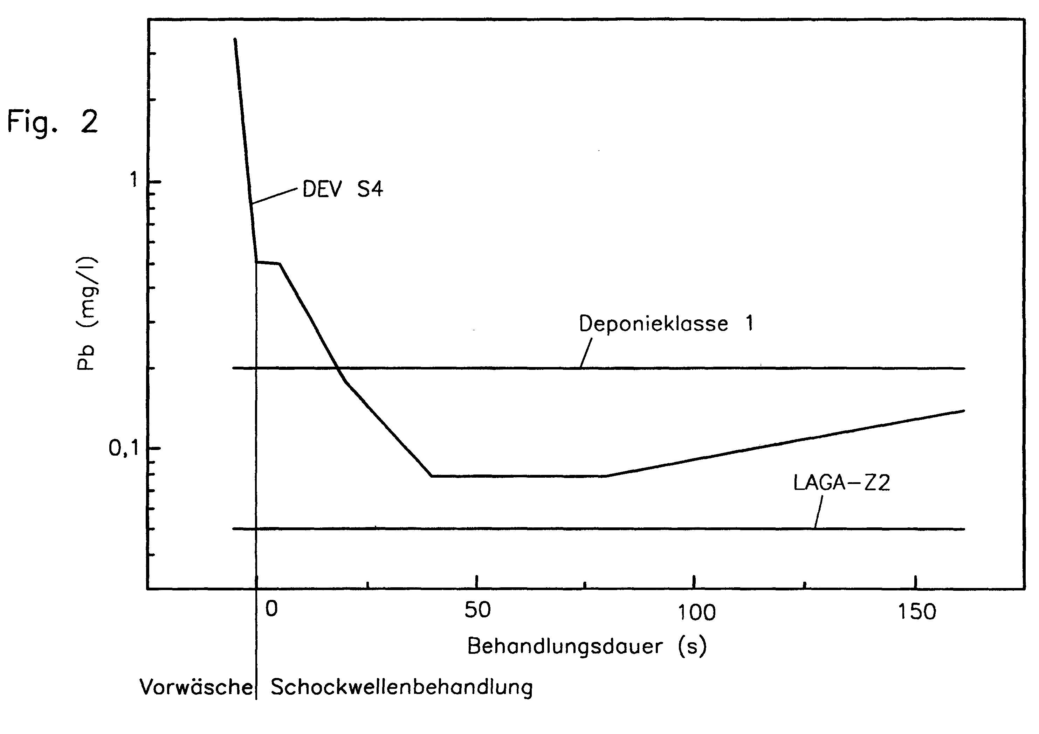

Die Zeichnung besteht aus den Figuren 1 und 2. Figur 1 zeigt den schematischen Aufbau der Anlage (Text s. o.) und Figur 2 den Verlauf der Eluation.

In Figur 2 ist der Verlauf der Eluation zu verschiedenen diskreten Phasen der Prozessierung der Asche aus einer Müllverbrennungsanlage dargestellt. Erwartungsgemäß ist die Bleikonzentration zu Beginn sehr hoch, sinkt aber während der Vorwaschphase in der zuführenden Transporteinrichtung bis zum Einfüllen in das Reaktionsgefäß steil auf etwa 0,5 mg/l ab. Im Reaktionsgefäß ändert sich die Bleikonzentration zu Beginn der Schockwellenbehandlung zunächst kaum, sinkt dann aber wieder steil ab und unterschreitet nach 20 sec bei einer Repetierrate von 4 Hz schon die Schwelle der Deponieklasse 1. Danach sinkt die Bleikonzentration etwas verhaltener ab und erreicht nach ca 40 sec ein Minimum von 0,08 mg/l, das erheblich unter der Schwelle der Deponie-1-Klasse liegt. Die Schockwellenbehandlung kann in diesem Durchführungsbeispiel also nach etwa 50 sec für diese Charge beendet werden, da die behandelte Asche damit schon - und nicht erst nach weiterer dreimonatiger Alterungszeit - eine Qualität zur sofortigen umweltgeeigneten Verwendung erreicht hat.

## Patentansprüche

1. Verfahren zur Aufbereitung von Asche aus Müllverbrennungsanlagen und von mineralischen Rückständen durch Entsalzung und künstlichen Alterung mittels elektrodynamischer Unter-Wasser-Prozesse,
bestehend aus den Schritten,
das Gut aus der Asche oder den Rückständen wird über eine Transportvorrichtung nach oben in ein mit einer Prozeßflüssigkeit gefüllten und durchströmten Reaktionsgefäßes gefördert,
bei der Förderung wird das Gut aus dem Reaktionsgefäß Prozeßflüssigkeit in der Menge von oben her entgegengeströmt, daß Salze auf den Gutkörnern abgewaschen, darin gelöst und in das Vorratsbecken zurück geschwemmt werden (Gegenstromentsalzung), von wo die aufgefangene gesättigte Salzlösung zur Ausfällung der Salze einem Verdampfer zugeführt wird,
das Gut wird in der Prozeßflüssigkeit im Reaktionsgefäß den darin von gepulsten elektrodynamischen Hochspannungs-Funkenentladungen zwischen zwei eingetauchten Elektroden vorgegebener Anzahl und vorgegebener Repetitionsrate erzeugten Schockwellen ausgesetzt,
die elektrische Entladung wird mit folgenden Parameterbereichen vorgenommen:
elektrische Feldstärke in den Grenzen zwischen 100 und 300 kV/cm, Impulsanstiegszeit überschreitet 500 ns nicht und
der Funke erzeugt eine Schockwelle mittels Deposition von 120 bis 400 J pro Zentimeter Entladeweg,
die flüssigkeitslöslichen Bestandteile der Asche werden durch die Schockbehandlung in das Prozeßwasser ausgefällt und mit diesem zur Weiterbehandlung abgeführt,
freie Hydroxylradikale aus Schockwelle und aus funkeninduzierten Plasmaprozessen werden zur unmittelbaren Oxidation und Passivierung der Aschepartikel verwendet, wodurch in dem Eluat (DEV S4) der prozessierten Aschekomponenten die Schwermetallkonzentrationen derart reduziert ist, daß die Asche anschließend mindestens einer sofortigen Verwendung im Deponieklasse-1-Bereich zugeführt werden kann,
das vorgewaschene, schockbehandelte und auf den Boden der äußeren Wanne abgesunkene Gut wird von der zweiten Transporteinrichtung entnommen und auf eine Halte gefördert, dabei wird es im Gegenstrom der Prozeßflüssigkeit nachgewaschen.

2. Verfahren nach Anspruch 1,
**dadurch gekennzeichnet,**
**daß** das Gut räumlich von dem elektrischen Entladungsbereich der beiden Elektroden soweit auf Distanz gehalten wird, so daß seine Körner bei Einwirkung der von der Entladung zwischen den zwei Elektroden ausgehenden Schockwellen nicht weiter zerkleinert werden und nur das Gut von den Schockwellen erzeugten Radikalen chemisch gealtert wird.

3. Verfahren nach Anspruch 2,
**dadurch gekennzeichnet,**
**daß** das alkali-, erdalkali- und schwermetallhaltige Prozeßwasser in einen Wäscher gefördert, dort verdampft und als Feststoff, zusammen mit anderen aus der Rauchgasreinigung stammenden Feststoffen unter Tage verbracht und deponiert wird.

4. Verfahren nach Anspruch 3,
**dadurch gekennzeichnet,**
**daß** durch Zugabe von Kohlendioxidgas das Kalziumhydroxid gefällt und der pH-Wert des Prozeßwassers abgesenkt wird, was zu einer Verringerung der Löslichkeit der Schwermetalle führt.

5. Verfahren nach Anspruch 1 bis 5,
**dadurch gekennzeichnet,**
**daß** zur Reduzierung der Bearbeitungsdauer das Gut und zur Erhöhung des Durchsatzes an Material der Prozeßflüssigkeit Kohlendioxidgas zur wasserunlöslichen Karbonatbildung der Schwermetalle zugegeben wird.

6. Anlage zur Aufbereitung von Asche aus Müllverbrennungsanlagen und von mineralischen Rückständen durch Entsalzung und künstliche Alterung mittels elektrodynamischer Unter-Wasser-Prozesse,
bestehend aus:
- einer ersten Transporteinrichtung, an deren Eingang ein Auffang zum Einfüllen ist und deren Ausgang in ein Reaktionsgefäß gerichtet ist,
- dem mit einer Prozeßflüssigkeit bis zu einem vorgegeben Pegel gefüllten Reaktionsgefäß aus zwei Wannen mit übereinander liegendem tiefsten Bodenbereich , wovon die innere Wanne untergetaucht ist, und auf die innere Wanne der Ausgang der Transporteinrichtung gerichtet ist,
- aus mindestens einem mit einem Hochspannungs-Impulsgenerator verbundenen Elektrodenpaar, wovon die hochliegende Elektrode über ein außen verankertes Hubsystem mit ihrer Isolation
- höhen-, seitenverstell- und kippbar in die innere Wanne ragt und am distalen Ende auf vorgegebene Länge abisoliert ist, und die zweite Elektrode entweder ein in der zweiten Wanne liegende flächige Elektrode ist oder in der Art der hoch liegenden Elektrode ist,
- einer zweiten an der tiefsten Stelle der äußeren Wanne ansetzenden Transporteinrichtung, durch die die in dem Reaktionsgefäß prozessierte und abgesunkene Substanz abgeräumt und auf eine Auffangstelle geleitet wird,
- einer Prozeßflüssigkeitszufuhr am Ausgang der zweiten hochführenden Transporeinrichtung zum Einleiten der frischen Prozeßflüssigkeit und einer Rohrverbindung mit Pumpe zwischen dem Reaktionsgefäß und dem Ausgang der ersten hochführenden Transporteinrichtung sowie einer Prozeßflüssigkeitsableitung am Eingang der ersten Transporteinrichtung, wodurch frische Prozeßflüssigkeit im Gegenstrom unter Aufnahme löslicher und mitschwemmbarer Substanzen durch die Anlage geleitet und als Lösung wieder ausgeleitet werden kann.

7. Anlage nach Anspruch 6,
**dadurch gekennzeichnet,**
**daß** die frische Prozeßflüssigkeit Wasser oder eine der zur Prozessierung vorgesehenen Substanz geeignet Flüssigkeit ist.

8. Anlage nach Anspruch 7,
**dadurch gekennzeichnet,**
**daß** der tiefstliegende Bodenbereich in der inneren Wanne ein Gitter oder Sieb ist, durch das hindurch das schockwellenprozessierte Gut rieseln kann.

9. Anlage nach Anspruch 8,
**dadurch gekennzeichnet,**
**daß** die beiden Transporteinrichtungen aus einem Schneckentrieb oder einem umlaufenden Rechentrieb oder sonst einem flüssigkeitsdurchlässigen Trieb bestehen.

## Claims

1. Method of processing ash from refuse incinerators and mineral residues by desalination and artificial ageing by means of electrodynamic underwater processes, said method comprising the following steps:
the material from the ash or the residues is conveyed upwardly, via a conveyor, into a reaction vessel which is filled with a process fluid and traversed;
during the conveyance, the material from the reaction vessel flows in the opposite direction to the process fluid in such a quantity from above that salts on the material particles are washed-away, dissolved therein and floated back again into the storage tank (countercurrent desalination), whence the collected saturated salt solution is supplied to an evaporator for the precipitation of the salts;
the material, in the process fluid in the reaction vessel, is subjected to the shock waves produced therein by pulsed, electrodynamic high-voltage spark discharges between two immersed electrodes of a prescribed number and prescribed rate of repetition;
the electrical discharge is effected with the following parameter ranges:
electrical field strength within the limits of between 100 and 300 kV/cm,
pulse growth time does not exceed 500 ns, and
the spark produces a shock wave by means of a deposition of 120 to 400 J per centimetre discharge path;
the constituent ingredients of the ash, which are soluble in fluid, are precipitated into the process water by the shock treatment and discharged with said process water for further treatment;
free hydroxyl radicals from the shock wave and from spark-induced plasma processes are used for the direct oxidation and passivation of the ash particles, whereby the heavy metal concentration in the eluate (DEV S4) of the processed ash components is reduced in such a manner that the ash can subsequently be supplied for at least one immediate use in the deposition Class 1 range; and
the prewashed, shock-treated material, which has been lowered onto the bottom of the outer trough, is removed by the second conveyor and conveyed onto a stop member, whereby it is subsequently washed in the countercurrent of the process fluid.

2. Method according to claim 1, **characterised in that** the material is retained spatially at a distance from the electrical discharge region of the two electrodes to such an extent that its particles are not comminuted further by the action of the shock waves, which emerge from the discharge between the two electrodes, and only the material is chemically aged by radicals produced by the shock waves.

3. Method according to claim 2, **characterised in that** the process water, which contains alkalis, earth alkalis and heavy metals, is conveyed into a washer, evaporated there and brought underground and deposited as solid matter, together with other solids originating from the cleaning of flue gas.

4. Method according to claim 3, **characterised in that** the calcium hydroxide is precipitated by the addition of carbon dioxide gas, and the pH value of the process water is lowered, thereby leading to the solubility of the heavy metals being reduced.

5. Method according to claims 1 to 4, **characterised in that**, in order to reduce the operational period for the material and to increase the throughput of material, carbon dioxide gas is added to the process fluid for the water-insoluble carbonate formation of the heavy metals.

6. System of processing ash from refuse incinerators and mineral residues by desalination and artificial ageing by means of electrodynamic underwater processes, said system comprising:
- a first conveyor, at the inlet of which there is a collecting means for filling purposes, and the outlet of which is directed into a reaction vessel;
- two troughs, from the reaction vessel which is filled with a process fluid up to a prescribed level, having their lowermost bottom regions disposed one above the other, the inner trough is immersed, and the outlet of the conveyor is directed towards the inner trough;
- at least one pair of electrodes, which are connected to a high-voltage pulse generator, the higher electrode protruding, via an externally secured lifting system with its insulation,
- into the inner trough so as to be vertically displaceable, laterally displaceable and pivotable and being insulated at the distal end over a prescribed length, and the second electrode is either a flat electrode which lies in the second trough or is in the form of the higher electrode;
- a second conveyor, which attaches to the lowermost point of the outer trough, and through which the substance, which has been processed in the reaction vessel and has been lowered, is removed and conducted to a collecting point;
- a means for supplying process fluid at the outlet of the second upwardly guiding conveyor to introduce the fresh process fluid, and a pipe connection to a pump between the reaction vessel and the outlet of the first upwardly guiding conveyor as well as a means for conducting-away process fluid at the inlet of the first conveyor, whereby fresh process fluid can be conducted through the system in countercurrent, whilst receiving soluble and jointly floatable substances, and can be discharged again as a solution.

7. System according to claim 6, **characterised in that** the fresh process fluid is water or a fluid suitable for the substance to be processed.

8. System according to claim 7, **characterised in that** the lowest bottom region in the inner trough is a grid or sieve, through which the material, processed by the shock wave, can trickle.

9. System according to claim 8, **characterised in that** the two conveyors comprise a screw drive or a rotating rack-type drive or otherwise a fluid-permeable drive.

## Revendications

1. Procédé de traitement de cendres provenant d'installations d'incinération d'ordures et de résidus minéraux, par élimination des sels et vieillissement artificiel en utilisant des process électrodynamiques sous l'eau, comportant les étapes suivantes :
- le produit composé des cendres ou des résidus est au moyen d'un dispositif transporteur, chargé par le haut dans un récipient de réaction qu'un liquide de process remplit et traverse,
- pendant ce transport, le produit est balayé à contre-courant par du liquide de process sortant du haut du récipient de réaction avec un débit tel que les sels situés sur les grains du produit sont lavés, dissouts dans le liquide et le produit est renvoyé au réservoir d'alimentation (désalinisation à contre-courant) d'où la solution saline saturée recueillie est envoyée à un vaporisateur pour séparer les sels,
- le produit se trouvant dans le liquide de process à l'intérieur du récipient de réaction est soumis, par des décharges électrodynamiques pulsées à étincelles à haute tension, produites entre deux électrodes immergées, à un nombre donné d'ondes de choc répétées à une cadence prédéfinie,
- la décharge électrique s'effectue avec les paramètres suivants délimités comme suit :
• intensité de champ électrique entre 100 et 300 kV/cm,
• temps de montée de l'impulsion ne dépassant pas 500 ns,
• l'étincelle produit une onde de choc avec une déposition de 120 à 400 J par centimètre de parcours de décharge,
- les composants des cendres, solubles dans les liquides, sont précipités par l'onde de choc dans l'eau de process et évacués avec celle-ci vers le traitement ultérieur,
- des radicaux hydroxyle libres résultant de l'onde de choc et des process plasmatiques induits par les étincelles sont utilisés pour oxyder directement et passiver les particules de cendre, et aussi, dans l'éluat (DEV S4) des composants de cendre traités, la concentration en métaux lourds est réduite au point que les cendres peuvent ensuite être amenées à une utilisation immédiate dans une zone de dépôt de classe 1,
- le produit prélavé, traité à l'onde de choc et qui s'est déposé au fond du bac externe est repris par le second dispositif de transport et amené sur une aire de repos, en ayant subi un lavage ultérieur à contre-courant par du liquide de process.

2. Procédé selon la revendication 1,
**caractérisé en ce que**
le produit est maintenu éloigné de la zone de décharge des deux électrodes à une distance telle que ses grains sous l'action des ondes de choc produites par la décharge entre les deux électrodes ne sont pas fragmentés davantage et que seul a lieu le vieillissement chimique du produit par l'action des radicaux engendrés par les ondes de choc.

3. Procédé selon la revendication 2,
**caractérisé en ce que**
l'eau de process contenant des métaux alcalins, alcalino-terreux et des métaux lourds est envoyée dans un laveur où elle est vaporisée en donnant une matière solide qui, avec d'autres matières solides provenant de l'épuration des gaz de fumée est mise en décharge par enfouissement.

4. Procédé selon la revendication 3,
**caractérisé en ce que**
l'addition de gaz carbonique fait précipiter l'hydroxyde de calcium et descendre le pH de l'eau de process, ce qui entraîne une réduction de la solubilité des métaux lourds.

5. Procédé selon l'une quelconque des revendications 1 à 5,
**caractérisé en ce que**
pour réduire le temps de traitement du produit et pour accroître le débit, on ajoute au liquide de process du gaz carbonique pour produire des carbonates de métaux lourds, insolubles dans l'eau.

6. Installation de traitement des cendres issues d'installations d'incinération d'ordures et de résidus minéraux par élimination des sels et vieillissement artificiel en utilisant des process électrodynamiques sous l'eau, dans laquelle :
- un premier dispositif de transport, présente une entrée équipée d'un réceptacle pour le charger et une sortie débouchant dans un récipient de réaction,
- le récipient de réaction, rempli d'un liquide de process jusqu'à un niveau prédéfini, est composé de deux bacs dont les fonds sont superposés, le bac interne étant immergé, avec la sortie du dispositif de transport dirigée vers lui,
- au moins une paire d'électrodes est reliée à un générateur d'impulsions à haute tension,
- l'électrode située en haut est portée, avec son isolation, par un système de levage, ancré à l'extérieur qui peut la régler en hauteur, latéralement et en inclinaison, et plongée dans le bac interne sans être isolée à son extrémité distale sur une longueur donnée,
- la seconde électrode est soit une électrode plate reposant dans le second bac, soit une électrode du même genre que l'électrode située en haut,
- un second transporteur part du point le plus bas du bac externe, il entraîne la substance qui a été traitée dans le récipient de réaction et qui a coulé, et il l'amène à un point de réception,
- une conduite aboutissant à la sortie du second transporteur élévateur amène du liquide de process frais, et une conduite tubulaire avec une pompe relie le récipient de réaction et la sortie du premier transporteur élévateur, et une dérivation est prévue à l'entrée du premier transporteur élévateur, de sorte que du liquide de process frais peut être envoyé à contre-courant dans l'installation pour recueillir les substances solubles et celles qui ont décanté, puis être évacué en tant que solution.

7. Installation selon la revendication 6,
**caractérisée en ce que**
le liquide de process frais est de l'eau ou un liquide convenant au traitement de la substance prévue.

8. Installation selon la revendication 7,
**caractérisée en ce que**
la partie la plus profonde, au fond du bac interne est une grille ou un crible, à travers lequel peut passer le produit traité par l'onde de choc.

9. Installation selon la revendication 8,
**caractérisée en ce que**
les deux dispositifs transporteurs sont des transporteurs à vis ou même un entraîneur à circulation de liquide.
